# EUROPEAN PATENT APPLICATION

(11) **EP 4 598 197 A1**
(43) Date of publication of application: **06.08.2025**
(21) Application number: 22960169.5
(22) Date of filing: 29.09.2022
(51) Int. Cl.: H04W 72/12, H04W 72/04, H04W 36/00

(54) **UPLINK WAVEFORM CONFIGURATION METHODS AND APPARATUSES, AND STORAGE MEDIUM**

(71) Applicant: Beijing Xiaomi Mobile Software Co., Ltd., Beijing 100085 (CN)
(72) Inventor: GAO, Xueyuan, Beijing 100085 (CN); JIANG, Xiaowei, Beijing 100085 (CN); QIAO, Xuemei, Beijing 100085 (CN)
(74) Representative: Gunzelmann, Rainer
(86) International application number: PCT/CN2022/122926
(87) International publication number: WO 2024/065534

(57) **Abstract**

The present disclosure relates to uplink waveform configuration methods and apparatuses, and a storage medium. One uplink waveform configuration method comprises: receiving first information sent by a network device, the first information being used for indicating a transmission waveform actually used by a terminal in physical uplink shared channel (PUSCH) transmission. The present disclosure can provide dynamic uplink waveform configuration for terminals.

## Description

### TECHNICAL FIELD

The disclosure relates to a field of communication technology, and particularly to a method and an apparatus for configuring an uplink waveform, and a storage medium.

### BACKGROUND

Presently, uplink coverage has been one of performance bottlenecks of a communication system. Limited uplink coverage affects a signal quality of a physical uplink shared channel (PUSCH) transmission, thus affecting user experience. In the related art, a variety of waveforms are employed to support the PUSCH transmission, and different waveforms have their own uplink coverage advantages for different scenarios.

In the related art, a network device typically performs semi-static configuration on waveform used by a terminal via a radio resource control (RRC) signaling. On this basis, if the waveform used by the terminal needs to be changed, reconfiguration needs to be performed on the RRC signaling. In the related art, a method for performing the semi-static configuration on the waveform via the RRC signaling requires a long delay to change the waveform, which is inflexible.

### SUMMARY

To overcome problems existing in the related art, the disclosure provides a method and an apparatus for configuring an uplink waveform, and a storage medium.

According to a first aspect of embodiments of the disclosure, there is provided a method for configuring an uplink waveform, applied to a terminal, including:
receiving first information sent by a network device, the first information being used to indicate a sending waveform actually used for a physical uplink shared channel (PUSCH) transmission by the terminal.

According to a second aspect of embodiments of the disclosure, there is provided a method for configuring an uplink waveform, applied to a network device, including: sending first information to a terminal, the first information being used to indicate a sending waveform actually used for a PUSCH transmission by the terminal.

According to a third aspect of embodiments of the disclosure, there is provided an apparatus for configuring an uplink waveform, applied to a terminal, including:
a receiving unit, configured to receive first information sent by a network device, the first information being used to indicate a sending waveform actually used for a PUSCH transmission by the terminal.

According to a fourth aspect of embodiments of the disclosure, there is provided an apparatus for configuring an uplink waveform, performed by a network device, including:
a sending unit, configured to send first information to a terminal, the first information being used to indicate a sending waveform actually used for a PUSCH transmission by the terminal.

According to a fifth aspect of embodiments of the disclosure, there is provided a device for configuring an uplink waveform, applied to a terminal, including:
a processor; and
a memory for storing executable instructions by the processor.

The processor is configured to execute any one method in the first aspect.

According to a sixth aspect of embodiments of the disclosure, there is provided a device for configuring an uplink waveform, applied to a network device, including:
a processor; and
a memory for storing executable instructions by the processor.

The processor is configured to execute any one method in the second aspect.

According to a seventh aspect of embodiments of the disclosure, there is provided a storage medium for storing instructions. When the instructions in the storage medium are performed by a processor of a terminal, the terminal is caused to execute any one method in the first aspect.

According to an eighth aspect of embodiments of the disclosure, there is provided a storage medium for storing instructions. When the instructions in the storage medium are performed by a processor of a network device, the network device is caused to execute any one method in the second aspect.

According to a ninth aspect of embodiments of the disclosure, there is provided a non-transitory computer-readable storage medium. When instructions in the storage medium are performed by a processor of a terminal, the terminal is caused to execute any one method in the first aspect.

According to a tenth aspect of embodiments of the disclosure, there is provided a non-transitory computer-readable storage medium. When instructions in the storage medium are performed by a processor of a network device, the network device is caused to execute any one method in the second aspect.

A technical solution provided by embodiments of the disclosure may include following beneficial effects. With the method for configuring the uplink waveform in the disclosure, the terminal may receive the indication information sent by the network device, the sending waveform actually used for the PUSCH transmission is obtained based on the indication information. Compared with the method for performing semi-static configuration on the waveform via the RRC signaling in the related art, the method in the disclosure may realize real-time indication of the sending waveform used by the terminal, and then realize a dynamic configuration of the uplink sending waveform used by the terminal.

It may be understood that above general description and following detailed description are only exemplary and explanatory, which do not limit the disclosure.

### BRIEF DESCRIPTION OF THE DRAWINGS

The accompanying drawings, which are incorporated in and constitute a part of this specification, illustrate embodiments consistent with the disclosure and, and serve to explain the principles of the disclosure together with the description.
FIG 1 is a schematic diagram illustrating a wireless communication system according to an exemplary embodiment.
FIG 2 is a schematic diagram illustrating a peak-to-average power ratio (PAPR) difference between a cyclic prefix orthogonal frequency-division multiplexing (CP-OFDM) waveform and a discrete fourier transform spread orthogonal frequency division multiplexing (DFTS-OFDM) waveform according to an exemplary embodiment.
FIG 3 is a flow chart illustrating a method for configuring an uplink waveform according to an exemplary embodiment.
FIG 4 is a flow chart illustrating a method for configuring an uplink waveform according to an exemplary embodiment.
FIG 5 is a block diagram illustrating an apparatus for configuring an uplink waveform according to an exemplary embodiment.
FIG 6 is a block diagram illustrating an apparatus for configuring an uplink waveform according to an exemplary embodiment.
FIG 7 is a block diagram illustrating a device for configuring an uplink waveform according to an exemplary embodiment.
FIG 8 is a block diagram illustrating a device for configuring an uplink waveform according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the disclosure.

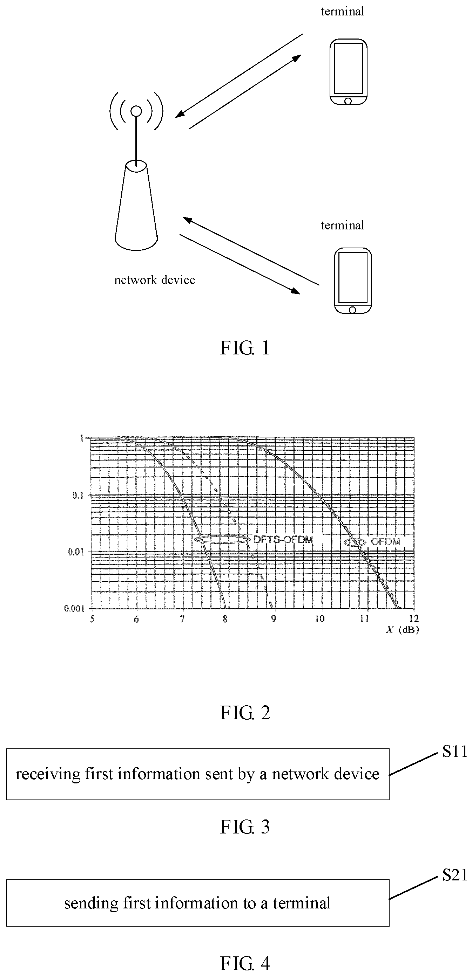

Embodiments of the disclosure provide a method for configuring an uplink waveform, which may be applied to a wireless communication system in FIG 1. As illustrated in FIG 1, the wireless communication system includes a network device and a terminal. The terminal is connected to the network device via a wireless resource, and performs data transmission.

**It** may be understood that the wireless communication system in FIG 1 is only a schematic description. The wireless communication system may also include other network devices, such as, a core network device, a wireless relay device and a wireless backhaul device, etc., which are not illustrated in FIG. 1. The number of network devices and the number of terminals in the wireless communication system are not limited in embodiments of the disclosure.

**It** may be further understood that the wireless communication system in embodiments of the disclosure is a network that provides a wireless communication function. The wireless communication system may employ different communication technologies, such as a code division multiple access (CDMA), a wideband code division multiple access (WCDMA), a time division multiple access (TDMA), a frequency division multiple access (FDMA), an orthogonal frequency-division multiple access (OFDMA), a single carrier FDMA (SC-FDMA), and a carrier sense multiple access with collision avoidance (CSMA/CA). According to a factor such as capacities, speeds, and delays of different networks, the networks may be categorized into a second generation (2G) network, a 3G network, a 4G network, or a future evolved network, such as a 5G network. The 5G network may also be referred to as a new radio (NR). For clarity of description, the wireless communication network may sometimes be simply referred to as a network in the disclosure.

Furthermore, the network device in the disclosure may also be called a wireless access network device. This wireless access network device may be a base station, an evolved node B (ENB), a home base station, an access point (AP) in a wireless fidelity (WIFI) system, a wireless relay node, a wireless backhaul node, a transmission point (TP), a transmission and reception point (TRP), a gNB in an NR system, or a component or some device constituting a base station. It may be understood that a detailed technology and device form of the network device are not limited in embodiments of the disclosure. In the disclosure, the network device may provide a communication coverage for a specific geographic area and may communicate with the terminal located within a coverage area (cell). In addition, in case of a vehicle-to-everything (V2X) communication system, the network device may also be a vehicle-mounted device.

Furthermore, the terminal in the disclosure may also be called a terminal device, a user equipment (UE), a mobile station (MS), or a mobile terminal (MT), which is a device that provides a voice and/or data connectivity to a user. For example, the terminal may be a handheld device with a wireless connectivity, a vehicle-mounted device, etc. At present, examples of the terminal include a smartphone, a customer premise equipment (CPE), a pocket personal computers (PPC), a palmtop, a personal digital assistant (PDA), a laptop, a tablet, a wearable device, or a vehicle-mounted device. In addition, in the case of the V2X communication system, the terminal may also be the vehicle-mounted device. It may be understood that a detailed technology and device form of the terminal are not limited in embodiments of the disclosure.

**In** the related art, multiple waveforms are used to support a physical uplink shared channel (PUSCH) transmission, for example, including a cyclic prefix orthogonal frequency division multiplexing (CP-OFDM) waveform and a discrete fourier transform spread orthogonal frequency division multiplexing (DFTS-OFDM) waveform. As illustrated in FIG 2, a peak-to-average power ratio (PAPR) of the DFTS-OFDM waveform is about 3db lower than a PAPR of the CP-OFDM waveform. The CP-OFDM waveform may maximize a network capacity in a dense urban area, while the DFTS-OFDM waveform, with a lower PAPR, is more suitable for a limited uplink coverage scenario (e.g., an uplink coverage at a cell edge).

**In** the related art, the network device typically performs semi-static configuration on the waveform used by the terminal via a radio resource control (RRC) signaling. For example, in a configuration parameter of the PUSCH, configuration items for the CP-OFDM waveform and the DFTS-OFDM waveform may be enumerated via a transform precoder. For example, the CP-OFDM waveform is configured by a configuration item "disabled", and the DFTS-OFDM waveform is configured with a configuration item "enabled". Furthermore, for a codebook-based PUSCH transmission, the network device decides a transmission precoding matrix indicator (TPMI) and a rank indicator (RI) used by the terminal in an actual transmission and notifies the terminal. The terminal needs to use the TPMI and the RI specified by the network device for precoding in a subsequent PUSCH transmission. Tables 1 to 9 below are used to indicate the TPMI and the RI.

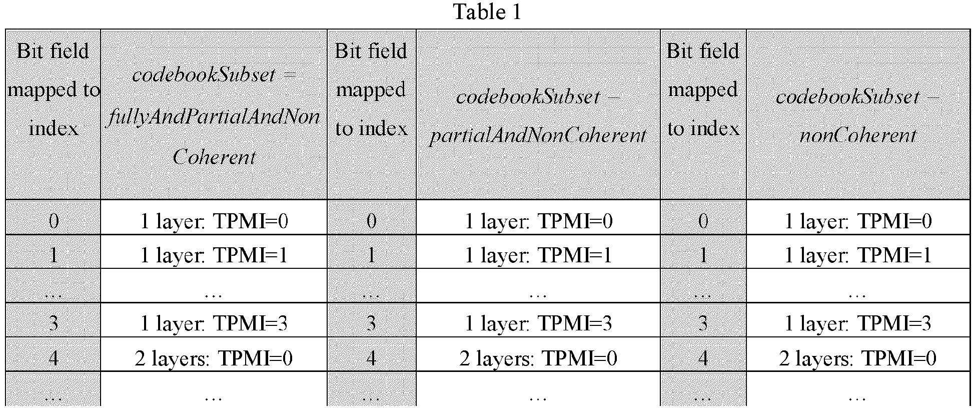

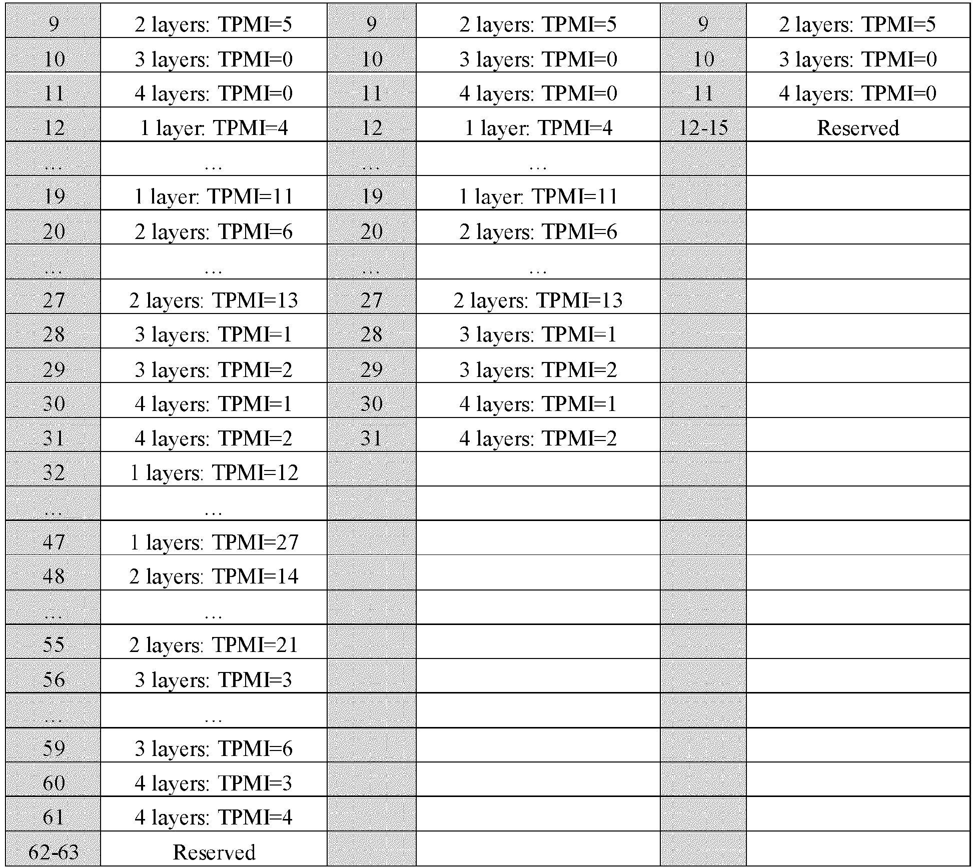

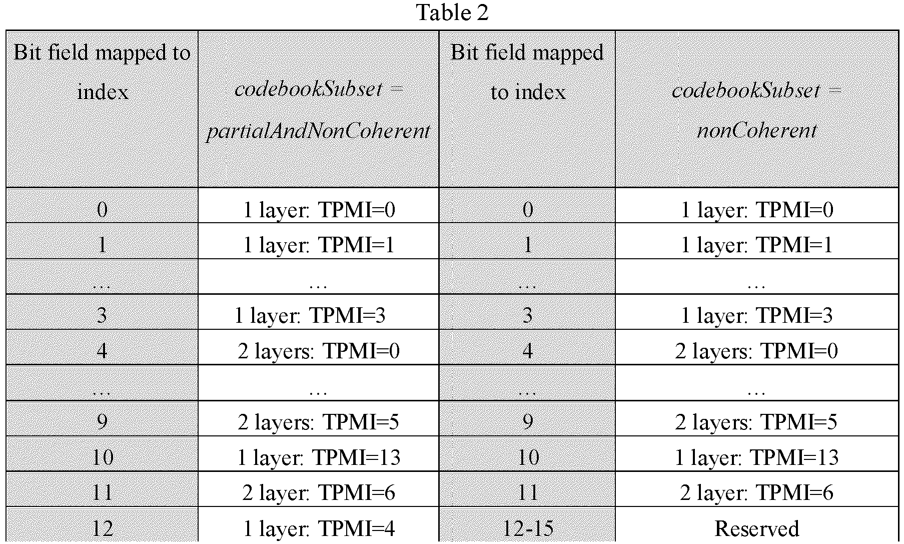

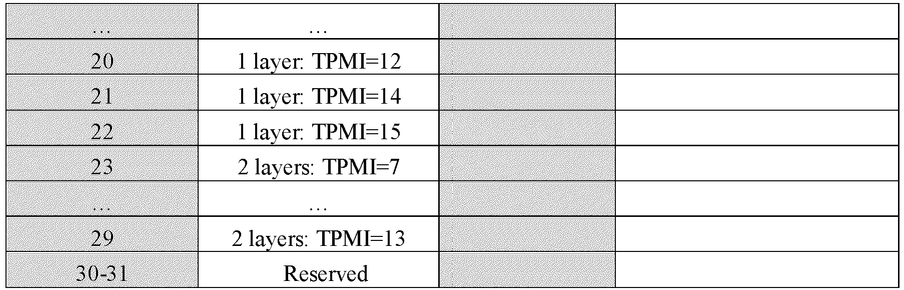

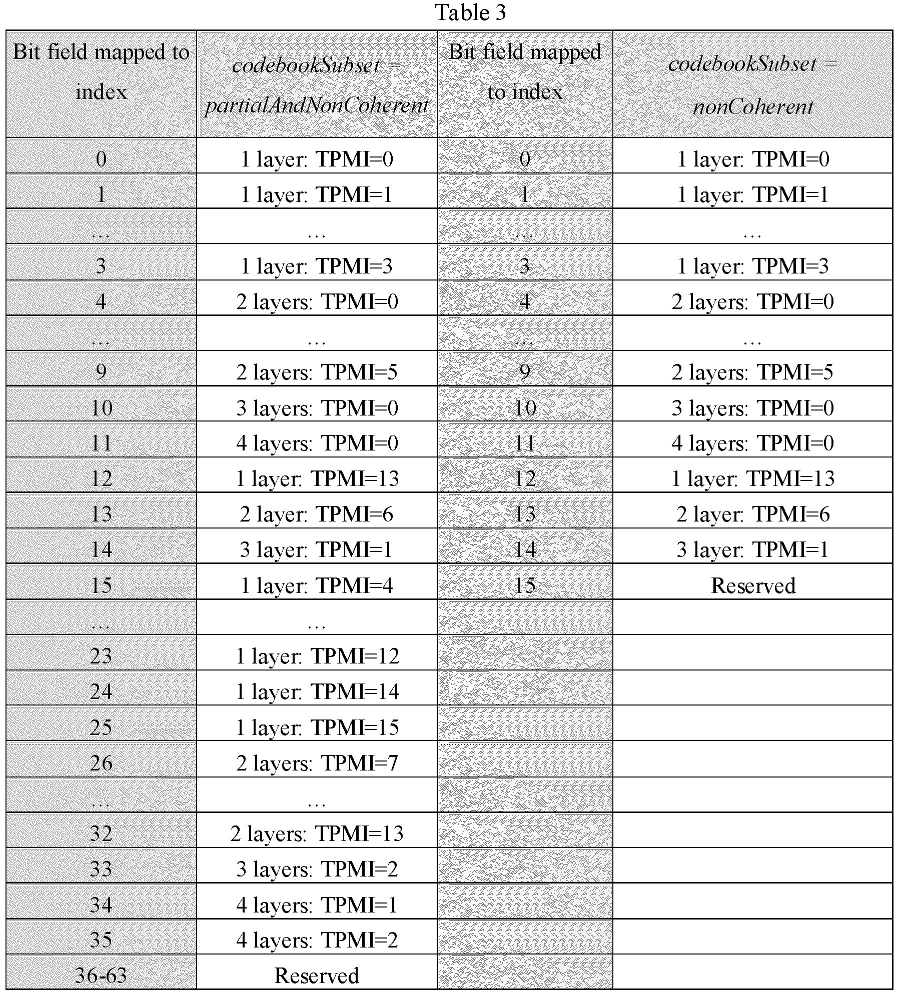

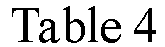

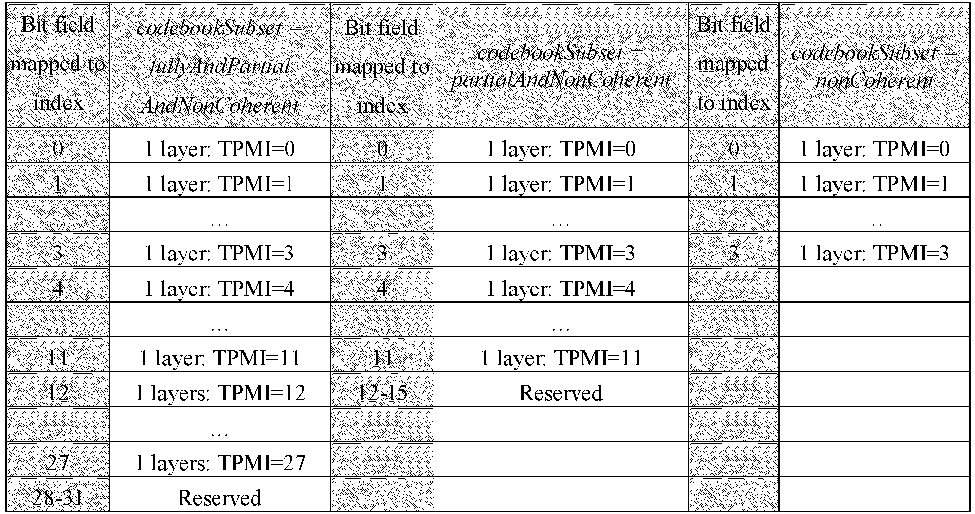

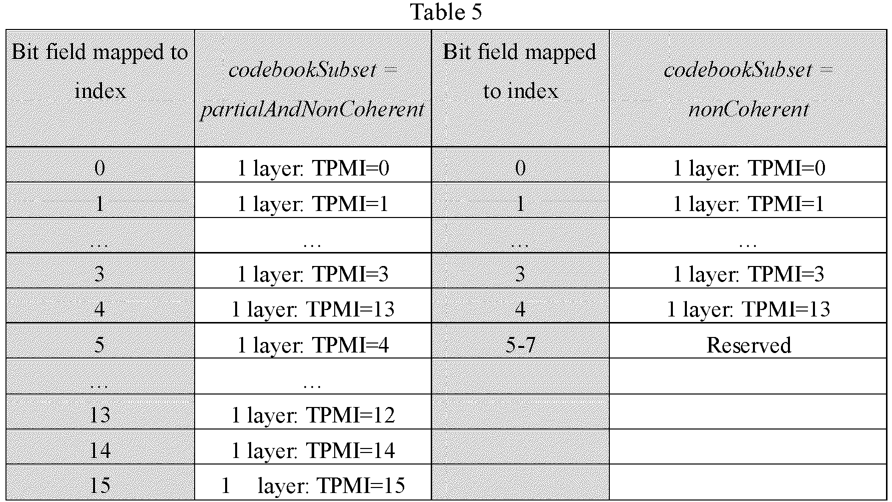

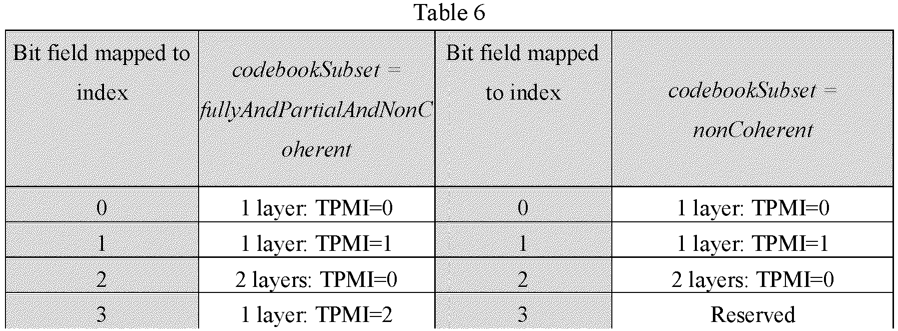

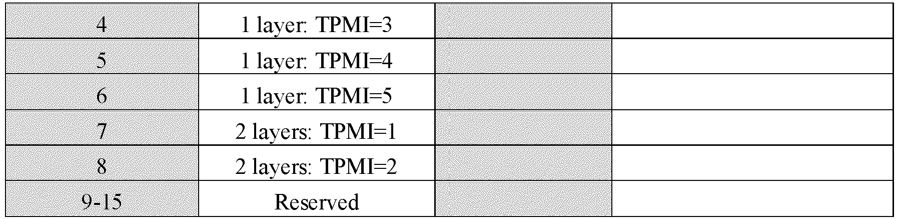

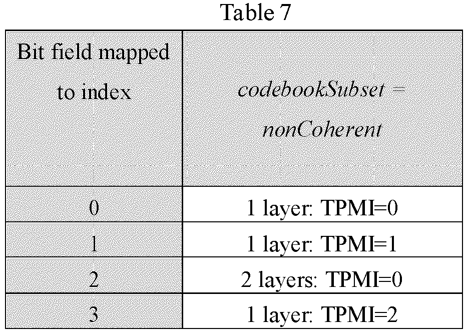

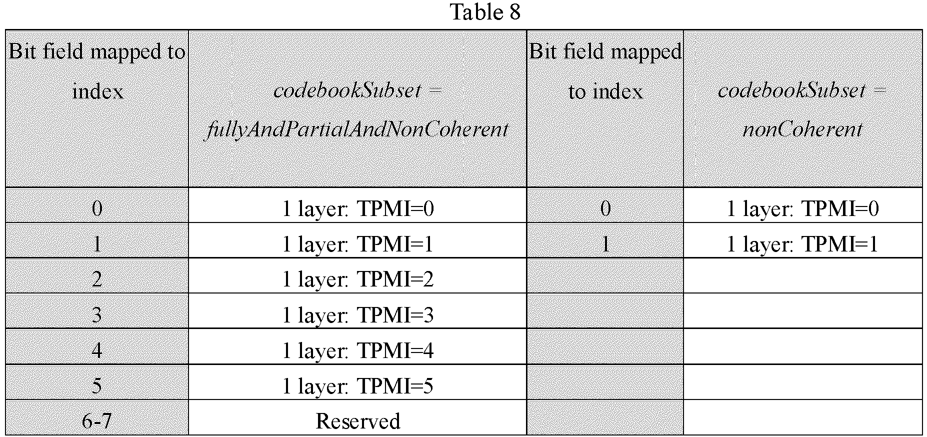

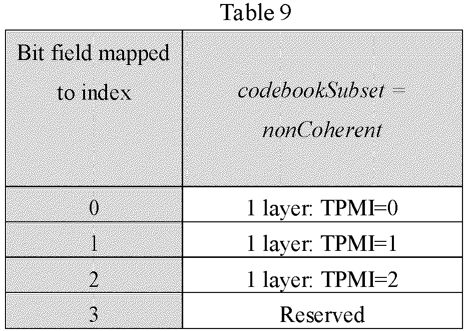

Bit field mapped to index represents a bit field mapped to an index, codebookSubset represents a codebook subset. A transmission capacity of the codebook subset includes: fullyAndPartialAndNonCoherent, partialAndNonCoherent, and nonCoherent. Taking Table 1 as an example, Table 1 illustrates precoding information and the number of layers in a codebook subset with 4 antenna ports when a maximum rank is 1 or 2 or 3 or 4. In addition, a mapping way of the antenna port is illustrated in following tables 10 to 29.

**Table 10**

| Value | Number of DMRS CDM group(s) without data | **DMRS** port(s) |
|---|---|---|
| 0 | 2 | 0 |
| 1 | 2 | 1 |
| 2 | 2 | 2 |
| 3 | 2 | 3 |

**Table 11**

| Value | Number of DMRS CDM group(s) without data | DMRS port(s) |
|---|---|---|
| 0 | 2 | 0, n_{SCID} = 0 |
| 1 | 2 | 0, n_{SCID} = 1 |
| 2 | 2 | 2, n_{SCID} = 0 |
| 3 | 2 | 2, n_{SCID} = 1 |

**Table 12**

| Value | Number of DMRS CDM group(s) without data | DMRS port(s) | Number of front-load symbols |
|---|---|---|---|
| 0 | 2 | 0 | 1 |
| 1 | 2 | 1 | 1 |
| 2 | 2 | 2 | 1 |
| 3 | 2 | 3 | 1 |
| 4 | 2 | 0 | 2 |
| 5 | 2 | 1 | 2 |
| 6 | 2 | 2 | 2 |
| 7 | 2 | 3 | 2 |
| 8 | 2 | 4 | 2 |
| 9 | 2 | 5 | 2 |
| 10 | 2 | 6 | 2 |
| 11 | 2 | 7 | 2 |
| 12-15 | Reserved | Reserved | Reserved |

**Table 13**

| Value | Number of DMRS CDM group(s) without data | DMRS port(s) | Number of front-load symbols |
|---|---|---|---|
| 0 | 2 | 0, n_{SCID} = 0 | 1 |
| 1 | 2 | 0, n_{SCID} = 1 | 1 |
| 2 | 2 | 2, n_{SCID} = 0 | 1 |
| 3 | 2 | 2, n_{SCID} = 1 | 1 |
| 4 | 2 | 0, n_{SCID} = 0 | 2 |
| 5 | 2 | 0, n_{SCID} = 1 | 2 |
| 6 | 2 | 2, n_{SCID} = 0 | 2 |
| 7 | 2 | 2, n_{SCID} = 1 | 2 |
| 8 | 2 | 4, n_{SCID} = 0 | 2 |
| 9 | 2 | 4, n_{SCID} = 1 | 2 |
| 10 | 2 | 6, n_{SCID} = 0 | 2 |
| 11 | 2 | 6, _{SCID} = 1 | 2 |
| 12-15 | Reserved | Reserved | Reserved |

**Table 14**

| Value | Number of DMRS CDM group(s) without data | DMRS port(s) |
|---|---|---|
| 0 | 1 | 0 |
| 1 | 1 | 1 |
| 2 | 2 | 0 |
| 3 | 2 | 1 |
| 4 | 2 | 2 |
| 5 | 2 | 3 |
| 6-7 | Reserved | Reserved |

**Table 15**

| Value | Number of DMRS CDM group(s) without data | DMRS port(s) |
|---|---|---|
| 0 | 1 | 0, 1 |
| 1 | 2 | 0, 1 |
| 2 | 2 | 2, 3 |
| 3 | 2 | 0, 2 |
| 4-7 | Reserved | Reserved |

**Table 16**

| Value | Number of DMRS CDM group(s) without data | DMRS port(s) |
|---|---|---|
| 0 | 2 | 0-2 |
| 2-7 | Reserved | Reserved |

**Table 17**

| Value | Number of DMRS CDM group(s) without data | **DMRS** port(s) |
|---|---|---|
| 0 | 2 | 0-3 |
| 2-7 | Reserved | Reserved |

**Table 18**

| Value | Number of DMRS CDM group(s) without data | DMRS port(s) | Number of front-load symbols |
|---|---|---|---|
| 0 | 1 | 0 | 1 |
| 1 | 1 | 1 | 1 |
| 2 | 2 | 0 | 1 |
| 3 | 2 | 1 | 1 |
| 4 | 2 | 2 | 1 |
| 5 | 2 | 3 | 1 |
| 6 | 2 | 0 | 2 |
| 7 | 2 | 1 | 2 |
| 8 | 2 | 2 | 2 |
| 9 | 2 | 3 | 2 |
| 10 | 2 | 4 | 2 |
| 11 | 2 | 5 | 2 |
| 12 | 2 | 6 | 2 |
| 13 | 2 | 7 | 2 |
| 14-15 | Reserved | Reserved | Reserved |

**Table 19**

| Value | Number of DMRS CDM group(s) without data | DMRS port(s) | Number of front-load symbols |
|---|---|---|---|
| 0 | 1 | 0, 1 | 1 |
| 1 | 2 | 0, 1 | 1 |
| 2 | 2 | 2, 3 | 1 |
| 3 | 2 | 0, 2 | 1 |
| 4 | 2 | 0, 1 | 2 |
| 5 | 2 | 2, 3 | 2 |
| 6 | 2 | 4, 5 | 2 |
| 7 | 2 | 6, 7 | 2 |
| 8 | 2 | 0, 4 | 2 |
| 9 | 2 | 2, 6 | 2 |
| 10-15 | Reserved | Reserved | Reserved |

**Table 20**

| Value | Number of DMRS CDM group(s) without data | DMRS port(s) | Number of front-load symbols |
|---|---|---|---|
| 0 | 2 | 0-2 | 1 |
| 1 | 2 | 0, 1, 4 | 2 |
| 2 | 2 | 2,3,6 | 2 |
| 3-15 | Reserved | Reserved | Reserved |

**Table 21**

| Value | Number of DMRS CDM group(s) without data | DMRS port(s) | Number of front-load symbols |
|---|---|---|---|
| 0 | 2 | 0-3 | 1 |
| 1 | 2 | 0, 1, 4, 5 | 2 |
| 2 | 2 | 2, 3, 6, 7 | 2 |
| 3 | 2 | 0,2,4,6 | 2 |
| 4-15 | Reserved | Reserved | Reserved |

**Table 22**

| Value | Number of DMRS CDM group(s) without data | DMRS port(s) |
|---|---|---|
| 0 | 1 | 0 |
| 1 | 1 | 1 |
| 2 | 2 | 0 |
| 3 | 2 | 1 |
| 4 | 2 | 2 |
| 5 | 2 | 3 |
| 6 | 3 | 0 |
| 7 | 3 | 1 |
| 8 | 3 | 2 |
| 9 | 3 | 3 |
| 10 | 3 | 4 |
| 11 | 3 | 5 |
| 12-15 | Reserved | Reserved |

**Table 23**

| Value | Number of DMRS CDM group(s) without data | DMRS port(s) |
|---|---|---|
| 0 | 1 | 0, 1 |
| 1 | 2 | 0, 1 |
| 2 | 2 | 2, 3 |
| 3 | 3 | 0, 1 |
| 4 | 3 | 2, 3 |
| 5 | 3 | 4, 5 |
| 6 | 2 | 0, 2 |
| 7-15 | Reserved | Reserved |

**Table 24**

| Value | Number of DMRS CDM group(s) without data | DMRS port(s) |
|---|---|---|
| 0 | 2 | 0-2 |
| 1 | 3 | 0-2 |
| 2 | 3 | 3-5 |
| 3-15 | Reserved | Reserved |

**Table 25**

| Value | Number of DMRS CDM group(s) without data | DMRS port(s) |
|---|---|---|
| 0 | 2 | 0-3 |
| 1 | 3 | 0-3 |
| 2-15 | Reserved | Reserved |

**Table 26**

| Value | Number of DMRS CDM group(s) without data | DMRS port(s) | Number of front-load symbols |
|---|---|---|---|
| 0 | 1 | 0 | 1 |
| 1 | 1 | 1 | 1 |
| 2 | 2 | 0 | 1 |
| 3 | 2 | 1 | 1 |
| 4 | 2 | 2 | 1 |
| 5 | 2 | 3 | 1 |
| 6 | 3 | 0 | 1 |
| 7 | 3 | 1 | 1 |
| 8 | 3 | 2 | 1 |
| 9 | 3 | 3 | 1 |
| 10 | 3 | 4 | 1 |
| 11 | 3 | 5 | 1 |
| 12 | 3 | 0 | 2 |
| 13 | 3 | 1 | 2 |
| 14 | 3 | 2 | 2 |
| 15 | 3 | 3 | 2 |
| 16 | 3 | 4 | 2 |
| 17 | 3 | 5 | 2 |
| 18 | 3 | 6 | 2 |
| 19 | 3 | 7 | 2 |
| 20 | 3 | 8 | 2 |
| 21 | 3 | 9 | 2 |
| 22 | 3 | 10 | 2 |
| 23 | 3 | 11 | 2 |
| 24 | 1 | 0 | 2 |
| 25 | 1 | 1 | 2 |
| 26 | 1 | 6 | 2 |
| 27 | 1 | 7 | 2 |
| 28-31 | Reserved | Reserved | Reserved |

**Table 27**

| Value | Number of DMRS CDM group(s) without data | DMRS port(s) | Number of front-load symbols |
|---|---|---|---|
| 0 | 1 | 0, 1 | 1 |
| 1 | 2 | 0, 1 | 1 |
| 2 | 2 | 2, 3 | 1 |
| 3 | 3 | 0, 1 | 1 |
| 4 | 3 | 2, 3 | 1 |
| 5 | 3 | 4, 5 | 1 |
| 6 | 2 | 0, 2 | 1 |
| 7 | 3 | 0, 1 | 2 |
| 8 | 3 | 2, 3 | 2 |
| 9 | 3 | 4, 5 | 2 |
| 10 | 3 | 6, 7 | 2 |
| 11 | 3 | 8, 9 | 2 |
| 12 | 3 | 10, 11 | 2 |
| 13 | 1 | 0, 1 | 2 |
| 14 | 1 | 6, 7 | 2 |
| 15 | 2 | 0, 1 | 2 |
| 16 | 2 | 2, 3 | 2 |
| 17 | 2 | 6, 7 | 2 |
| 18 | 2 | 8, 9 | 2 |
| 19-31 | Reserved | Reserved | Reserved |

**Table 28**

| Value | Number of DMRS CDM group(s) without data | DMRS port(s) | Number of front-load symbols |
|---|---|---|---|
| 0 | 2 | 0-2 | 1 |
| 1 | 3 | 0-2 | 1 |
| 2 | 3 | 3-5 | 1 |
| 3 | 3 | 0, 1, 6 | 2 |
| 4 | 3 | 2, 3, 8 | 2 |
| 5 | 3 | 4, 5, 10 | 2 |
| 6-31 | Reserved | Reserved | Reserved |

**Table 29**

| Value | Number of DMRS CDM group(s) without data | DMRS port(s) | Number of front-load symbols |
|---|---|---|---|
| 0 | 2 | 0-3 | 1 |
| 1 | 3 | 0-3 | 1 |
| 2 | 3 | 0, 1, 6, 7 | 2 |
| 3 | 3 | 2, 3, 8, 9 | 2 |
| 4 | 3 | 4, 5, 10, 11 | 2 |
| 5-31 | Reserved | Reserved | Reserved |

Number of a demodulation reference signal (DMRS) code division multiplexing (CDM) group(s) without data represents the number of DMRS CDM groups without data, Value represents a bit value, DMRS port(s) represents a DMRS port, and Number of front-load symbols represents the number of front-load symbols. Taking Table 10 as an example, Table 10 illustrates that, when the transform precoder is enabled, dmrs-Type=1, maxLength=1, rank = 1, and that dmrs-UplinkTransformPrecoding-r16 and tp-pi2BPSK are both configured and π/2-BPSK modulation is used.

Based on the above, the uplink coverage is one of performance bottlenecks of the communication system. The lmited uplink coverage affects a signal quality of a PUSCH transmission, thus affecting a user experience. In the related art, a variety of waveforms are employed to support the PUSCH transmission, and different waveforms have their own uplink coverage advantages for different scenarios.

In the related art, a network device typically performs semi-static configuration on the waveform used by the terminal via the RRC signaling. On this basis, if the waveform used by the terminal needs to be changed, the RRC signaling is needed to be reconfigured. In the related art, a method for performing the semi-static configuration on the waveform via the RRC signaling requires a long delay to change the waveform, which is inflexible.

Based on this, the disclosure provides a method for configuring an uplink waveform. The terminal may receive indication information sent by the network device, and obtain a sending waveform actually used for a PSUCH transmission based on the indication information. Compared with the method for performing the semi-static configuration on the waveform via the RRC signaling in the related art, the method in the disclosure may realize real-time indication of the sending waveform used by the terminal, and then realize a dynamic configuration of an uplink sending waveform used by the terminal. For clarity of description, the indication information sent by the network device above is referred to as first information, and the first information is used to indicate the sending waveform actually used for the PUSCH transmission by the terminal.

FIG 3 is a flow chart illustrating a method for configuring an uplink waveform according to an exemplary embodiment. As illustrated in FIG 3, the method is applied to a terminal, and may include the following.

At block S11, first information sent by a network device is received.

With the method for configuring the uplink waveform in the disclosure, the terminal receives the first information sent by the network device. Since the first information is used to indicate a sending waveform actually used for a PUSCH transmission by the terminal, the terminal may dynamically configure the sending waveform actually used for the PUSCH transmission by the terminal based on indication of the first information, thus improving flexibility of configuration of the sending waveform.

In the method for configuring the uplink waveform in the disclosure, the first information may be, such as, carried in an RRC signaling and a medium access control control element (MAC CE) signaling. In case where the first information is carried in both the RRC signaling and the MAC CE signaling, the first information included in the RRC signaling may be the same as or different from the first information included in the MAC CE signaling.

In embodiments of the disclosure, the RRC signaling is used to indicate one or more sending waveforms. For example, the disclosure may achieve a selection or update of a configured sending waveform by a combined use of the MAC CE signaling and the RRC signaling.

In one implementation, on the basis of indicating one or more sending waveforms via the RRC signaling, the MAC CE signaling is used to indicate a first sending waveform in the one or more sending waveforms indicated by the RRC signaling, and the first sending waveform is taken as the sending waveform actually used for the PUSCH transmission by the terminal.

For example, during communication between the network device and the terminal, the network device may indicate and configure the one or more sending waveforms for the terminal by sending the RRC signaling, and the terminal may subsequently perform the PUSCH transmission based on the configured sending waveform. On this basis, before the terminal performs the PUSCH transmission, the network device may, by sending the MAC CE signaling, indicate the terminal in real time to select the sending waveform actually used for a current PUSCH transmission from the one or more configured sending waveforms. Moreover, the one or more sending waveforms configured for the terminal may be further divided into following two executing scenarios based on the number of the configured sending waveforms. In one executing scenario, the terminal is configured with only one sending waveform via the RRC signaling, and the network device may directly indicate the configured sending waveform for the PUSCH transmission which needs to be used by the terminal, by sending the MAC CE signaling. Correspondingly, in another executing scenario, the terminal is configured with multiple sending waveforms via the RRC signaling, and the network device may select one of the sending waveforms based on an actual requirement and configure the MAC CE signaling based on the selected sending waveform, and indicate the terminal to perform the PUSCH transmission based on the selected sending waveform by the network device via the MAC CE signaling.

In another implementation, for the CP-OFDM waveform and the DFTS-OFDM waveform, the network device may indicate one of the sending waveforms via the RRC signaling, and the MAC CE signaling may be used to update the sending waveform indicated by the RRC signaling to another sending waveform not indicated by the RRC signaling (hereinafter referred to as a second sending waveform for clarity of description, in which the second sending waveform is different from a single sending waveform indicated previously). In detail, the MAC CE signaling may be used to update the single sending waveform indicated by the RRC signaling to the second sending waveform, and the second sending waveform is taken as the sending waveform actually used for the PUSCH transmission by the terminal.

Presently, the sending waveform available for the PUSCH transmission by the terminal only includes two types, i.e., the CP-OFDM waveform and the DFTS-OFDM waveform. If the sending waveform for the PUSCH transmission by the terminal is further expanded in the future (e.g., further introducing a new sending waveform in addition to the CP-OFDM waveform and the DFTS-OFDM waveform), the above updating way of the sending waveform may also be employed to perform corresponding expanding. For example, the network device may indicate the one or more sending waveforms (e.g., a sending waveform W1 and a sending waveform W2) via the RRC signaling, and the MAC CE signaling may be used to update the sending waveform indicated by the RRC signaling to another sending waveform not previously indicated by the RRC signaling (e.g., a sending waveform W3).

In the method for configuring the uplink waveform in the disclosure, the first information may be carried in the MAC CE signaling, and the MAC CE signaling is used to indicate the sending waveform actually used for the PUSCH transmission by the terminal. Moreover, in the method for configuring an uplink waveform in the disclosure, the first information may only be carried in the MAC CE signaling, such that the sending waveform may be directly configured and indicated via the MAC CE signaling. Compared with the method in the above embodiments where the first information is carried in both the MAC CE signaling and the RRC signaling, the way for only carrying the first information in the MAC CE signaling does not need to pre-configure the sending waveform actually used for the PUSCH transmission by the terminal. In such way, may indication and activation of the sending waveform may be further simplified, which meets a configuration requirement of the terminal.

In the method for configuring the uplink waveform in the disclosure, the first information is carried in a downlink control information (DCI) signaling. For example, the DCI signaling includes waveform indication information and is used to schedule the PUSCH transmission. The waveform indication information is used to indicate the sending waveform actually used for the PUSCH transmission by the terminal. In embodiments of the disclosure, the network device may configure and schedule the PUSCH transmission for the terminal by sending the DCI signaling. Meanwhile, the terminal may extract the waveform indication information from a received DCI signaling, and determine the sending waveform actually used for the PUSCH transmission based on the waveform indication information.

In an implementation, the waveform indication information is carried in an information indication field newly added in a DCI, and the information indication field newly added is dedicated to indicating the sending waveform actually used for the PUSCH transmission by the terminal. As a feasible implementation, a new information field dedicated to indicating the sending waveform may be provided in the DCI signaling by adding a bit. Furthermore, the number of bits newly added for indicating the sending waveform may be, such as, 1.

Further, a bit value of the bit may be defined. For example, a bit value being 1 may indicate the terminal to use the CP-OFDM waveform, and a bit value being 0 may indicate the terminal to use the DFTS-OFDM waveform. For another example, a bit value being 0 may indicate the terminal to use the CP-OFDM waveform, and a bit value being 1 may indicate the terminal to use the DFTS-OFDM waveform. In addition, if the sending waveform for the PUSCH transmission by the terminal is further expanded in the future, to allow that more than two sending waveforms are available to the terminal, the number of bits used to indicate the sending waveform may be extended accordingly. For example, the number of bits used to indicate the sending waveform actually used by the terminal may be extended to two, which is used to indicate the sending waveform when there are less than four sending waveforms. For example, "00", "01", "10", and "11" may be used to indicate four different sending waveforms.

In embodiments of the disclosure, the waveform indication information may be carried in a redefined information indication field in the DCI. It may be understood that the redefined information indication field is used to indicate the sending waveform actually used for the PUSCH transmission by the terminal, and to indicate other information than the sending waveform. In other words, the redefined information indication field is originally used to indicate other information than the sending waveform, and a capability to indicate the sending waveform is additionally added based on a practical requirement for indicating the sending waveform in the disclosure.

In one implementation, there is an implicit corresponding relationship of joint indication between the waveform indication information and the other information, in which it may be understood that the implicit corresponding relationship is a corresponding relationship identified in the terminal but not in the other information. Taking a DMRS port indication field as an example, an exemplary implementation for indicating the sending waveform by the redefined information indication field and the implicit corresponding relationship is described below. For clarity of understanding, an indication table of the DMRS port indication field is illustrated in Table 30 below.

**Table 30**

| Value | Number of DMRS CDM group(s) without data | DMRS port(s) |
|---|---|---|
| 0 | 1 | 0 |
| 1 | 1 | 1 |
| 2 | 2 | 0 |
| 3 | 2 | 1 |
| 4 | 2 | 2 |
| 5 | 2 | 3 |
| 6 | 2 | 0 |
| 7 | 2 | 1 |
| 8 | 2 | 2 |
| 9 | 2 | 3 |
| 10-15 | Reserved | Reserved |

As illustrated in Table 30 above, for the DMRS port indication field, the bit value may take any value from 0 to 5 to indicate the number of the DMRS CDM groups, the DMRS ports, and a mapping relationship between the number of the DMRS CDM groups and the DMRS ports. On this basis, a bit value range from 6 to 9 may be redefined such that mapping for a bit value taken from 6 to 9 aligns with mapping for a bit value taken from 2 to 5. Furthermore, an implicit definition may be applied to different bit values in the DMRS port indication field. For example, when the bit value takes any value from 0 to 5, the sending waveform CP-OFDM is indicated; and when the bit value takes any value from 6 to 9, the sending waveform DFTS-OFDM is indicated, thus establishing an implicit corresponding relationship between the bit value and the sending waveform. On this basis, the DMRS port indication field may indicate the terminal to use different sending waveforms via the DMRS port indication field having different bit values with a consistent mapping mode.

For example, when the DMRS port indication field indicates that there are two DMRS CDM groups and indicates that the DMRS port is labeled as "2", bit values configurable in a network device side may include 4 and 8. On this basis, in the case that the network device intends to indicate the terminal to perform the PUSCH transmission via the CP-OFDM waveform, the bit value may be configured as 4. Similarly, in the case that the network device intends to indicate the terminal to perform the PUSCH transmission via the DFTS-OFDM waveform, the bit value may be configured as 8, thus achieving an indication for the sending waveform.

In another implementation, there is an explicit corresponding relationship of joint indication between the waveform indication information and the other information, in which it may be understood that the explicit corresponding relationship is a corresponding relationship identified in the other information. Taking the DMRS port indication field as an example again, an exemplary implementation for indicating the sending waveform via the redefined information indication field and the explicit corresponding relationship is described below. For clarity of understanding, an indication table of the DMRS port indication field is illustrated in Table 31 below.

**Table 31**

| Value | Number of DMRS CDM group(s) without data | DMRS port(s) | waveform |
|---|---|---|---|
| 0 | 1 | 0 | CP-OFDM |
| 1 | 1 | 1 | |
| 2 | 2 | 0 | |
| 3 | 2 | 1 | |
| 4 | 2 | 2 | |
| 5 | 2 | 3 | |
| 6 | 2 | 0 | DFTS-OFDM |
| 7 | 2 | 1 | |
| 8 | 2 | 2 | |
| 9 | 2 | 3 | |
| 10-15 | Reserved | Reserved | |

As illustrated in Table 31 above, an explicit indication table of the DMRS port indication field further adds a mapping relationship between the bit value and the sending waveform based on an implicit indication table. Similar to Table 30, in Table 31, when a bit value takes any one value from 0 to 5, the sending waveform CP-OFDM is indicated; and when a bit value takes any one value from 6 to 9, the sending waveform DFTS-OFDM is indicated. On this basis, when indication of the number of the DMRS CDM groups and the DMRS ports is triggered via the bit values, the bit value may also indicate the sending waveform used for the PUSCH transmission by the terminal.

In the method for configuring the uplink waveform in embodiments of the disclosure, the other information used for jointly indication with the waveform indication information may include, such as, at least one of: the number of antenna ports under a single carrier; pre-coding information of a transmitted precoding matrix indicator (TPMI) indication field; time domain resource allocation (TDRA) information; or bandwidth part (BWP) information.

In the method for configuring the uplink waveform in embodiments of the disclosure, the PUSCH may include: a centralized generation (CG) PUSCH with a first authorization type, a CG PUSCH with a second authorization type, or a distributed generation (DG) PUSCH. The CG PUSCH with the first authorization type may be understood as a CG PUSCH of a configuration authorization type 1 (Type 1), and the CG PUSCH with the second authorization type may be understood as a CG PUSCH of a configuration authorization type 2 (Type 2).

For clarity of understanding, the Type 1 and the Type 2 are explained separately below.

The Type 1 is provided with an uplink authorization via the RRC signaling, such, including activation of an authorization. The terminal takes effect immediately once the RRC signaling is successfully received. A transmission parameter configured via the RRC signaling may include a period, a time offset, a frequency resource, and a modulation coding way used by the PUSCH transmission. After an RRC configuration is received, the terminal performs transmission using an authorization configuration at a time point determined by the period and the offset. The offset controls a time when the terminal is permitted to perform transmission.

The Type 2 is provided with a transmission period via the RRC signaling. The network device implements resource activation and configuration of some transmission parameters via the DCI signaling, to activate the activation and transmission of the authorization configuration. After an activation command is received, the terminal transmits data based on a preconfigured period if the data in a buffer is to be sent; otherwise, the terminal may not transmit any data. The activation time is determined by a sending time of the PDCCH. The terminal may select activating or deactivating the Type 2 by sending the MAC signaling in the uplink.

For the CG PUSCH Type 1, dynamic configuration of the sending waveform may be implemented via multiple ways in the above embodiments. For example, the RRC signaling and the MAC CE signaling may be used in combination to activate or update an indication for the terminal to select a sending waveform for the PUSCH transmission. In one feasible implementation, when the network device sends the RRC signaling to provide the uplink authorization, the network device may configure the one or more sending waveforms for the terminal via the RRC signaling for the PUSCH transmission. Then, the network device may use the MAC CE signaling to indicate the terminal to select one sending waveform from the configured sending waveforms as the sending waveform actually used for the PUSCH transmission. In another feasible implementation, when the network device sends the RRC signaling to provide the uplink authorization, the network device may configure the sending waveform used for the PUSCH transmission by the terminal via the RRC signaling, and the MAC CE signaling updates the sending waveform configured by the terminal to another sending waveform different from the sending waveform, and then the PUSCH transmission is performed with the updated sending waveform. In addition, the way for dynamically configuring the sending waveform via the MAC CE signaling is also applicable to the CG PUSCH Type 1.

Correspondingly, for the CG PUSCH Type 2, dynamic configuration of the sending waveform may similarly be achieved via various ways in the above embodiments. For example, the DCI signaling may be used to indicate or update the sending waveform. In one feasible implementation, when the network device sends the DCI signaling to provide configuration activation, the network device may configure the sending waveform actually used for the PUSCH transmission via the DCI signaling. For the way that the sending waveform is indicated via the DCI signaling, the waveform indication information configured to indicate the sending waveform actually used for PUSCH transmission by the terminal may be carried in, such as, an indication field newly added in the DCI or an indication field of other information. For the indication field newly added in the DCI, an indicated sending waveform is directly determined based on the bit value in the indication field. For the indication field of the other information, the indicated sending waveform may be determined by a predefined indication way. In addition, for joint indication between the waveform indication information and the other information, configurable indication information include, but is not limited to, at least one of: the number of antenna ports under a single carrier; pre-coding information of a TPMI indication field; TDRA information; or BWP information. A configured indication way may be any one of an explicit indication or an implicit indication.

In addition, the way for indicating multiple sending waveforms in the above embodiments is equally applicable to the DG PUSCH.

With the method for configuring the uplink waveform in embodiments of the disclosure, dynamic configuration of the sending waveform for the PUSCH transmission may be realized by a use of the MAC CE signaling alone, a combination of the RRC signaling and the MAC CE signaling, and/or a use of the DCI signaling alone. For a solution that dynamically configures the sending waveform in any one of the above methods, a theoretical time required for waveform configuration is a few milliseconds. However, in the related art, a theoretical time required for performing the semi-static configuration on the sending waveform via the RRC signaling is tens of milliseconds. It may be seen that, compared with the way for configuring the sending waveform in the related art, the method for configuring the uplink waveform in the disclosure has a smaller processing period, which improves timeliness of the waveform configuration, and provides an effective solution for dynamically configuring the uplink waveform. In addition, the method in the embodiments of the disclosure may be adapted to the CG PUSCH Type 1, the CG PUSCH Type 2, and the DG PUSCH, and provides different solutions adaptive to different types of PUSCHs, which has high flexibility in implementation of communication scenarios.

Based on a same concept, the disclosure further provides a method for configuring an uplink waveform, applied to a network device.

The network device in embodiments is configured to interact with the terminal in any one of the above embodiments to complete the configuration of the sending waveform actually used by the terminal. If there is ambiguity in the following embodiments, reference may be made to any one of the above embodiments. Similarly, if there is ambiguity in the above embodiments, reference may also be made to any one of the following embodiments.

FIG 4 is a flow chart of a method for configuring an uplink waveform according to an exemplary embodiment. As illustrated in FIG 4, the method is performed by a network device, and may include S21.

At S21, first information is sent to a terminal.

The first information is used to indicate a sending waveform actually used for a PUSCH transmission by the terminal.

With the method for configuring the uplink waveform in the disclosure, the network device sends the first information to the terminal. Since the first information is used to indicate the sending waveform actually used for the PUSCH transmission by the terminal, the network device may dynamically configure the sending waveform actually used for the PUSCH transmission by the terminal based on the first information, thus improves flexibility of configuration of the sending waveform.

In the method for configuring an uplink waveform in the disclosure, the first information may be, such as, carried in an RRC signaling and an MAC CE signaling. In case where the first information is carried in both the RRC signaling and the MAC CE signaling, the first information included in the RRC signaling may be the same as or different from the first information included in the MAC CE signaling.

In embodiments of the disclosure, the RRC signaling is used to indicate one or more sending waveforms. For example, the disclosure may achieve a selection or update of a configured sending waveform via a combined use of the MAC CE signaling and the RRC signaling.

In one implementation, on the basis of indicating one or more sending waveforms via the RRC signaling, the MAC CE signaling is used to indicate a first sending waveform in the one or more sending waveforms indicated by the RRC signaling, and the first sending waveform is taken as the sending waveform actually used for the PUSCH transmission by the terminal.

For example, during communication between the network device and the terminal, the network device may indicate and configure the one or more sending waveforms for the terminal by sending the RRC signaling, and the terminal may subsequently perform the PUSCH transmission based on the configured sending waveform. On this basis, before the terminal performs the PUSCH transmission, the network device may, by sending the MAC CE signaling, indicate the terminal in real time to select the sending waveform actually used for a current PUSCH transmission from the one or more configured sending waveforms. Moreover, the one or more sending waveforms configured for the terminal may be further divided into following two executing scenarios based on the number of the configured sending waveforms. In one executing scenario, the terminal is configured with only one sending waveform via the RRC signaling, and the network device may directly indicate the terminal to use the configured sending waveform for the PUSCH transmission by sending the MAC CE signaling. Correspondingly, in another executing scenario, the terminal is configured with multiple sending waveforms via the RRC signaling, and the network device may select one of the sending waveforms based on an actual requirement and configure the MAC CE signaling based on the selected sending waveform, and indicate the terminal to perform the PUSCH transmission based on the selected sending waveform by the network device via the MAC CE signaling.

In another implementation, for the CP-OFDM waveform and the DFTS-OFDM waveform, the network device may indicate one of the sending waveforms via the RRC signaling, and the MAC CE signaling may be used to update the sending waveform indicated by the RRC signaling to another sending waveform not indicated by the RRC signaling (hereinafter referred to as a second sending waveform for clarity of description, in which the second sending waveform is different from a single sending waveform previously indicated). In detail, the MAC CE signaling may be used to update the single sending waveform indicated by the RRC signaling to the second sending waveform, and the second sending waveform is taken as the sending waveform actually used for the PUSCH transmission by the terminal.

Presently, the sending waveforms available for the PUSCH transmission by the terminal only include two types, i.e., the CP-OFDM waveform and the DFTS-OFDM waveform. If the sending waveform for the PUSCH transmission by the terminal is further expanded in the future (e.g., introducing a new sending waveforms in addition to the CP-OFDM waveform and the DFTS-OFDM waveform), the above updating way of the sending waveform may also be employed to perform corresponding expanding. For example, the network device may indicate one or more sending waveforms (e.g., a sending waveform W1 and a sending waveform W2) via the RRC signaling, and the MAC CE signaling may be used to update the sending waveform indicated by the RRC signaling to another sending waveform not previously indicated by the RRC signaling (e.g., a sending waveform W3).

In the method for configuring the uplink waveform in the disclosure, the first information may be carried in the MAC CE signaling, and the MAC CE signaling is used to indicate the sending waveform actually used for the PUSCH transmission by the terminal. Moreover, in the method for configuring the uplink waveform in the disclosure, the first information may only be carried in the MAC CE signaling, such that the sending waveform may be directly configured and indicated via the MAC CE signaling. Compared with the method in the above embodiments where the first information is carried in both the MAC CE signaling and the RRC signaling, the method for only carrying the first information in the MAC CE signaling does not need to pre-configure the sending waveform actually used for the PUSCH transmission by the terminal. In such way, may indication and activation of the sending waveform may be further simplified, which meets a configuration requirement of the terminal.

In the method for configuring the uplink waveform in the disclosure, the first information is carried in a DCI signaling. For example, the DCI signaling includes waveform indication information and is used to schedule the PUSCH transmission. The waveform indication information is used to indicate the sending waveform actually used for the PUSCH transmission by the terminal. In embodiments of the disclosure, the network device may configure and schedule the PUSCH transmission for the terminal by sending the DCI signaling. Meanwhile, the terminal may extract the waveform indication information from a received DCI signaling, and determine the sending waveform actually used for the PUSCH transmission based on the waveform indication information.

In one implementation, the waveform indication information is carried in an information indication field newly added in a DCI, and the information indication field newly added is dedicated to indicating the sending waveform actually used for the PUSCH transmission by the terminal. As a feasible implementation, a new information field dedicated to indicating the sending waveform may be provided in the DCI signaling by adding a bit. Furthermore, the number of bits newly added for indicating the sending waveform may be, such as, 1.

Further, a bit value of the bit may be defined. For example, a bit value being 1 may indicate the terminal to use the CP-OFDM waveform, and a bit value being 0 may indicate the terminal to use the DFTS-OFDM waveform. For another example, a bit value being 0 may indicate the terminal to use the CP-OFDM waveform, and a bit value being 1 may indicate the terminal to use the DFTS-OFDM waveform. In addition, if the sending waveform for the PUSCH transmission by the terminal is further expanded in the future, to allow that more than two sending waveforms are available to the terminal, the number of bits used to indicate the sending waveform may be extended accordingly. For example, the number of bits used to indicate the sending waveform actually used by the terminal may be extended to 2, which is used to indicate the sending waveform when there are less than four sending waveforms. For example, "00", "01", "10", and "11" may be used to indicate four different sending waveforms.

In the embodiments of the disclosure, the waveform indication information may be carried in a redefined information indication field in the DCI. It may be understood that the redefined information indication field is used to indicate the sending waveform actually used for the PUSCH transmission by the terminal, and to indicate other information than the sending waveform. In other words, the redefined information indication field is originally used to indicate other information than the sending waveform, and a capability to indicate the sending waveform is additionally added based on a practical requirement for indicating the sending waveform in the disclosure.

In one implementation, there is an implicit corresponding relationship of joint indication between the waveform indication information and the other information, in which the implicit corresponding relationship is a corresponding relationship identified in the terminal but not in the other information.

In another implementation, there is an explicit corresponding relationship of joint indication between the waveform indication information and the other information, in which the explicit corresponding relationship is a corresponding relationship identified in the other information.

In the method for configuring the uplink waveform in embodiments of the disclosure, the other information used for jointly indication with the waveform indication information may include, such as, at least one of: a number of antenna ports under a single carrier; pre-coding information of a TPMI indication field; TDRA information; or BWP information.

In the method for configuring an uplink waveform in embodiments of the disclosure, the PUSCH may include: a CG PUSCH Type 1, a CG PUSCH Type 2, or a DG PUSCH. The CG PUSCH Type 1 may be understood as a CG PUSCH configured with Type 1, and the CG PUSCH Type 2 may be understood as a CG PUSCH configured with Type 2.

For the CG PUSCH Type 1, dynamic configuration of the sending waveform may be implemented via the method in the above embodiments. For example, the RRC signaling and the MAC CE signaling may be used in combination to activate or update an indication for the terminal to select a sending waveform for the PUSCH transmission. In one feasible implementation, when the network device sends the RRC signaling to provide an uplink authorization, the network device may configure the one or more sending waveforms for the terminal via the RRC signaling for the PUSCH transmission. Then, the network device may use the MAC CE signaling to indicate the terminal to select one sending waveform from the configured sending waveforms as the sending waveform actually used for the PUSCH transmission. In another feasible implementation, when the network device sends the RRC signaling to provide the uplink authorization, the network device may configure the sending waveform used for the PUSCH transmission by the terminal via the RRC signaling, and the MAC CE signaling updates the sending waveform configured by the terminal to another sending waveform different from the sending waveform, and then the PUSCH transmission is performed with the updated sending waveform. In addition, the way for dynamically configuring the sending waveform via the MAC CE signaling is also applicable to the CG PUSCH Type 1.

Correspondingly, for the CG PUSCH Type 2, dynamic configuration of the waveform may similarly be achieved via various ways in the above embodiments. For example, the DCI signaling may be used to indicate or update the sending waveform. In one feasible implementation, when the network device sends the DCI signaling to provide configuration activation, the network device may configure the sending waveform actually used for the PUSCH transmission via the DCI signaling. For the way that the sending waveform is indicated via the DCI signaling, the waveform indication information configured to indicate the sending waveform actually used for PUSCH transmission by the terminal may be carried in, such as, an indication field newly added in the DCI or an indication field of other information. For the indication field newly added in the DCI, an indicated sending waveform is directly determined by the bit value in the indication field. For the indication field of the other information, the indicated sending waveform may be determined by a predefined indication way. In addition, for joint indication between the waveform indication information and the other information, configurable indication information include, but is not limited to, at least one of: the number of antenna ports under a single carrier; pre-coding information of a TPMI indication field; TDRA information; or BWP information. A configured indication way may be any one of an explicit indication or an implicit indication.

In addition, the way for indicating multiple sending waveforms in the above embodiments is equally applicable to the DG PUSCH.

With the method for configuring the uplink waveform in embodiments of the disclosure, dynamic configuration of the sending waveform for the PUSCH transmission may be realized by a use of the MAC CE signaling alone, a combination of the RRC signaling and the MAC CE signaling, and/or a use of the DCI signaling alone. For a solution that dynamically configures the sending waveform in any one of the above methods, a theoretical time required for waveform configuration is a few milliseconds. However, in the related art, a theoretical time required for performing the semi-static configuration on the sending waveform via the RRC signaling is tens of milliseconds. It may be seen that, compared with the way for configuring the sending waveform in the related art, the method for configuring the uplink waveform in the disclosure has a smaller processing period, which improves timeliness of the waveform configuration, and provides an effective solution for dynamically configuring the uplink waveform. In addition, the method in the embodiments of the disclosure may be adapted to the CG PUSCH Type 1, the CG PUSCH Type 2, and the DG PUSCH, and provides different solutions adaptive to different types of PUSCHs, which has high flexibility in implementation of communication scenarios.

It may be further understood that the method for configuring the uplink waveform in embodiments of the disclosure is applicable to a process for realizing uplink waveform configuration by an interaction between the terminal and the network device. In the process for realizing uplink waveform configuration by the interaction between the terminal and the network device, both the terminal and the network device are equipped with a relevant function in the above embodiments.

It needs to be noted that it would be appreciated by those skilled in the art that various implementations/embodiments described above in embodiments of the disclosure may be used in conjunction with the above embodiments or be used alone. Whether used alone or in combination with the above embodiments, principles of the implementation are similar. In embodiments of the disclosure, some embodiments are described in combination with implementations used together. Of course, those skilled in the art will understand that such exemplary descriptions do not limit the scope of embodiments of the disclosure.

Based on a same idea, embodiments of the disclosure further provide an apparatus for configuring an uplink waveform.

**It** may be understood that, to realize the above functions, the apparatus for configuring the uplink waveform in embodiments of the disclosure includes hardware structures and/or software modules corresponding to execution of the above functions. In combination with units and algorithm steps of examples described in embodiments of the disclosure, embodiments of the disclosure may be implemented by hardware or a combination of hardware and computer software. Whether a certain function is executed by the hardware or the software depends on a specific application and a design constraint of the technical solution. Those skilled in the art may employ different methods for each specific application to realize the described functions, but such implementation should not be considered as going beyond the scope of the disclosure.

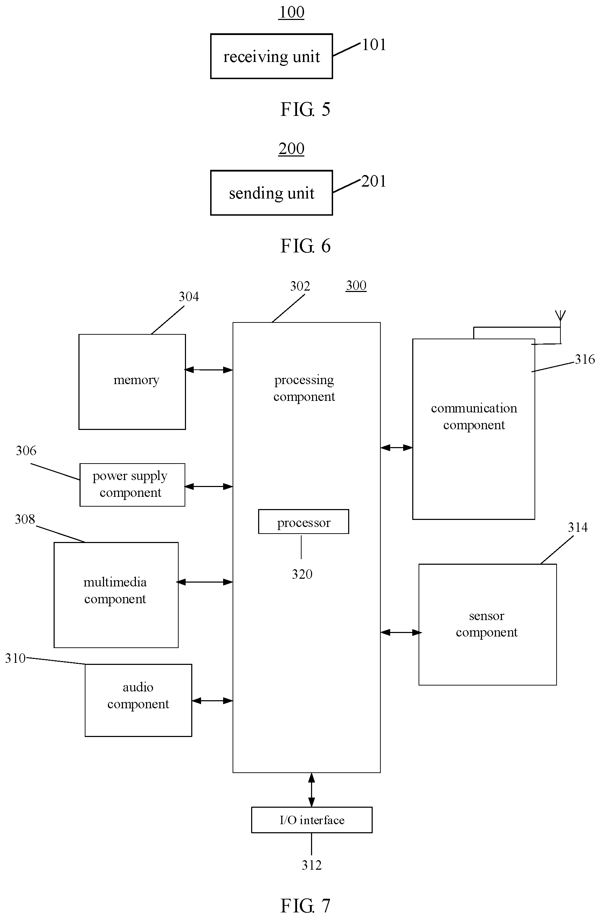

**FIG** 5 is a block diagram illustrating an apparatus 100 for configuring an uplink waveform according to an exemplary embodiment. As illustrated in FIG 5, the apparatus 100 is applied to a terminal, including a receiving unit 101.

The receiving unit 101 is configured to receive first information sent by a network device, in which the first information is used to indicate a sending waveform actually used for a PUSCH transmission by the terminal.

**In** one implementation, the first information is carried in an RRC signaling and an MAC CE signaling.

**In** one implementation, the RRC signaling is used to indicate one or more sending waveforms, the MAC CE signaling is used to indicate a first sending waveform in the one or more sending waveforms indicated by the RRC signaling, and the first sending waveform is taken as the sending waveform actually used for the PUSCH transmission by the terminal; or the MAC CE signaling is used to update a single sending waveform indicated by the RRC signaling to a second sending waveform, the second sending waveform being different from the single sending waveform, and the second sending waveform is taken as the sending waveform actually used for the PUSCH transmission by the terminal.

In one implementation, the first information is carried in an MAC CE signaling, and the MAC CE signaling is used to indicate the sending waveform actually used for the PUSCH transmission by the terminal.

In one implementation, the first information is carried in a DCI signaling. The DCI signaling includes waveform indication information and is used to schedule the PUSCH transmission; and the waveform indication information is used to indicate the sending waveform actually used for the PUSCH transmission by the terminal.

In one implementation, the waveform indication information is carried in an information indication field newly added in a DCI, and the information indication field newly added is dedicated to indicating the sending waveform actually used for the PUSCH transmission by the terminal.

In one implementation, the waveform indication information is carried in a redefined information indication field in a DCI, in which the redefined information indication field is used to indicate the sending waveform actually used for the PUSCH transmission by the terminal, and to indicate other information than the sending waveform.

In one implementation, there is an implicit corresponding relationship of joint indication between the waveform indication information and the other information, in which the implicit corresponding relationship is a corresponding relationship identified in the terminal but not in the other information.

In one implementation, there is an explicit corresponding relationship of joint indication between the waveform indication information and the other information, in which the explicit corresponding relationship is a corresponding relationship identified in the other information.

In one implementation, the other information includes at least one of: a number of antenna ports under a single carrier; pre-coding information of a TPMI indication field; TDRA information; or BWP information.

In one implementation, the PUSCH includes: a CG PUSCH with a first authorization type, a CG PUSCH with a second authorization type, or a DG PUSCH.

FIG 6 is a block diagram illustrating an apparatus 200 for configuring an uplink waveform according to an exemplary embodiment. As illustrated in FIG 6, the apparatus 200 is applied to a network device, including a sending unit 201.

The sending unit 201 is configured to send first information to a terminal, in which the first information is used to indicate a sending waveform actually used for a PUSCH transmission by the terminal.

In one implementation, the first information is carried in an RRC signaling and an MAC CE signaling.

In one implementation, the RRC signaling is used to indicate one or more sending waveforms, the MAC CE signaling is used to indicate a first sending waveform in the one or more sending waveforms indicated by the RRC signaling, and the first sending waveform is taken as the sending waveform actually used for the PUSCH transmission by the terminal; or the MAC CE signaling is used to update a single sending waveform indicated by the RRC signaling to a second sending waveform, the second sending waveform being different from the single sending waveform, and the second sending waveform is taken as the sending waveform actually used for the PUSCH transmission by the terminal.

In one implementation, the first information is carried in an MAC CE signaling, and the MAC CE signaling is used to indicate the sending waveform actually used for the PUSCH transmission by the terminal.

In one implementation, the first information is carried in a DCI signaling. The DCI signaling includes waveform indication information and is used to schedule the PUSCH transmission; and the waveform indication information is used to indicate the sending waveform actually used for the PUSCH transmission by the terminal.

In one implementation, the waveform indication information is carried in an information indication field newly added in a DCI, and the information indication field newly added is dedicated to indicating the sending waveform actually used for the PUSCH transmission by the terminal.

In one implementation, the waveform indication information is carried in a redefined information indication field in a DCI, in which the redefined information indication field is used to indicate the sending waveform actually used for the PUSCH transmission by the terminal, and to indicate other information than the sending waveform.

In one implementation, there is an implicit corresponding relationship of joint indication between the waveform indication information and the other information, in which the implicit corresponding relationship is a corresponding relationship identified on the terminal but not on the other information.

In one implementation, there is an explicit corresponding relationship of joint indication between the waveform indication information and the other information, in which the explicit corresponding relationship is a corresponding relationship identified on the other information.

In one implementation, the other information includes at least one of: a number of antenna ports under a single carrier; pre-coding information of a TPMI indication field; TDRA information; or BWP information.

In one implementation, the PUSCH includes: a CG PUSCH with a first authorization type, a CG PUSCH with a second authorization type, or a DG PUSCH.

About the apparatus in the above embodiments, a detailed method in which each module performs operations has been described in detail in embodiments related to the method, which will not be elaborated here.

It needs to be noted that modules/units included in the apparatus 100 for configuring the uplink waveform and the apparatus 200 for configuring the uplink waveform in embodiments of the disclosure are exemplary only and are not intended to limit the scope of the disclosure. For example, the apparatus 100 for configuring the uplink waveform may further include a sending unit and/or a processing unit. Similarly, the apparatus 200 for configuring the uplink waveform may further include a receiving unit and/or a processing unit. The units in the apparatus 100 for configuring the uplink waveform and the apparatus 200 for configuring the uplink waveform may interact with each other, or interact with other network elements.

FIG 7 is a block diagram illustrating a device 300 for configuring an uplink waveform according to an exemplary embodiment. For example, the device 300 may be a mobile phone, a computer, a digital broadcast terminal, a message sending and receiving device, a game console, a tablet, a medical device, a fitness device, a personal digital assistant, etc.

Referring to FIG 7, the device 300 may include one or more of: a processing component 302, a memory 304, a power supply component 306, a multimedia component 308, an audio component 310, an input/output (I/O) interface 312, a sensor component 314, and a communication component 316.

The processing component 302 typically controls the overall operation of the device 300, such as those associated with a display, a telephone call, a data communication, a camera operation, and a recording operation. The processing component 302 may include one or more processors 320 to execute instructions to complete all or some of steps of the above methods. In addition, the processing component 302 may include one or more modules to facilitate the interaction between the processing component 302 and other components. For example, the processing component 302 may include a multimedia module to facilitate the interaction between the multimedia component 308 and the processing component 302.

The memory 304 is configured to store various types of data to support operations on the device 300. Examples of these data include instructions of any application or method used to operate on the device 300, contact data, phone book data, messages, pictures, videos, etc. The memory 304 may be implemented by any type of volatile or non-volatile memory or their combination, such as a static random-access memory (SRAM), an electrically erasable programmable read-only memory (EEPROM), an erasable programmable read-only memory (EPROM), a programmable read-only memory (PROM), a read-only memory (ROM), a magnetic memory, a flash memory, a disk or CD.

The power supply component 306 provides power to the various components of the device 300. The power supply component 306 may include a power management system, one or more power supplies, and other components associated with generating, managing, and distributing power for the device 300.

The multimedia component 308 includes a screen that provides an output interface between the device 300 and the user. In some embodiments, the screen may include a liquid crystal display (LCD) and a touch panel (TP). If the screen includes the touch panel, the screen may be a touch screen to receive a signal input by the user. The touch panel includes one or more touch sensors to sense a touch, swiping, and gesture on the touch panel. The touch sensor may not only sense the boundary of a touch or sliding action, but also detect the duration and pressure associated with the touch or sliding operation. In some embodiments, the multimedia component 308 includes a front camera and/or a rear camera. When the device 300 is in an operating mode, such as a shooting mode or a video mode, the front camera and/or the rear camera may receive external multimedia data. Each front camera or each rear camera may be a fixed optical lens system or has a focal length and an optical zoom capability.

The audio component 310 is configured to output and/or input an audio signal. For example, the audio component 310 includes a microphone (MIC) that is configured to receive an external audio signal when the device 300 is in an operational mode, such as a call mode, a recording mode, and a speech recognition mode. The received audio signal may be further stored in the memory 304 or transmitted via a communication component 316. In some embodiments, the audio component 310 also includes a speaker for the output of the audio signal.

The I/O interface 312 provides an interface between the processing component 302 and the peripheral interface module. The peripheral interface module may be a keyboard, a click wheel, a button, etc. The button may include, but is not limited to: a home button, a volume button, a start button, and a locking button.

The sensor component 314 includes one or more sensors to provide a state assessment of various aspects of the device 300. For example, the sensor component 314 may detect an on/off state of the device 300, and a relative positioning of the component. For example, the component is a display and a keypad of the device 300, the sensor component 314 may also detect a change of the position of the device 300 or a change of one component of the device 300, detect a presence or an absence of a contact between the user and with the device 300, detect a direction of the device 300, or detect an acceleration/deceleration and detect a temperature change of the device 300. The sensor component 314 may include a proximity sensor configured to detect the presence of nearby objects without any physical contact. The sensor component 314 may also include an optical sensor, such as a CMOS or CCD image sensor, for using in an imaging application. In some embodiments, the sensor component 314 may also include an acceleration sensor, a gyroscope sensor, a magnetic sensor, a pressure sensor, or a temperature sensor.

The communication component 316 is configured to facilitate a wired or wireless communication between the device 300 and other devices. The device 300 may access a wireless network based on a communication standard, such as WiFi, 2G or 3G, or their combination. In an exemplary embodiment, the communication component 316 receives a broadcast signal or broadcast-related information from an external broadcast management system via a broadcast channel. In an exemplary embodiment, the communication component 316 also includes a near-field communication (NFC) module to facilitate a short-range communication. For example, the NFC module may be implemented based on a radio frequency identification (RFID) technology, an infrared data association (IrDA) technology, an ultra-wide band (UWB) technology, a bluetooth (BT) technology and other technologies.

**In** exemplary embodiments, the device 300 may be implemented by one or more application specific integrated circuits (ASICs), digital signal processors (DSPs), digital signal processing devices (DSPDs), programmable logic devices (PLDs), field programmable gate arrays (FPGAs), controllers, microcontrollers, microprocessors, or other electronic components to perform the above methods.

**In** exemplary embodiments, a non-transitory computer readable storage medium including instructions is also provided, such as a memory 304 including instructions. The instructions may be executed by the processor 320 of the device 300 to implement the above methods. For example, the non-transitory computer readable storage medium may be a read-only memory (ROM), a random access memory (RAM), a compact disc read-only memory (CD-ROM), a magnetic tape, a floppy disk, and an optical data storage device.

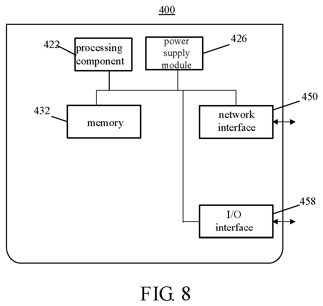

FIG 8 is a block diagram illustrating a device 400 for configuring an uplink waveform according to an exemplary embodiment. For example, the device 400 may be provided as a server. Referring to FIG 8, the device 400 includes a processing component 422, which further includes one or more processors, and a memory resource represented by a memory 432 for storing instructions that may be executed by the processing component 422, such as an application. The application stored in the memory 432 may include one or more modules, each corresponding to a set of instructions. In addition, the processing component 422 is configured to execute instructions to implement the above method.

The device 400 may also include a power supply module 426 configured to perform power management of the device 400, a wired or wireless network interface 450 configured to connect the device 400 to the network, and an I/O interface 458. The device 400 may operate an operating system stored on the memory 432, such as a Windows Server TM, a Mac OS XTM, a UnixTM, a LinuxTM, a FreeBSDTM, and so on.

It may be further understood that the term "a plurality of" and "multiple" in the disclosure refers to two or more, and other quantifiers are similar. The term "and/or" is only an association relation describing an associated object, indicating that there may be three kinds of relations, for example, A and/or B may be represented as the following three conditions: there is A alone, there is A and B simultaneously, and there is B alone. The character "/" generally indicates an "or" relationship between the associated objects. The singular forms "a/an" and "the" are also intended to include plural forms unless the context clearly indicates other meaning.

**It** may be further understood that terms such as "first", "second", etc., are used to describe various information, but such information should not be limited by these terms. These terms are only used to distinguish information of the same type from each other and do not imply a specific order or level of importance. In fact, the terms "first", "second", etc., may be used interchangeably. For example, without departing from the scope of the disclosure, first information may also be referred to as second information, and similarly, second information may also be referred to as first information.

It may be further understood that, although operations are described in a particular order in the accompanying drawings in embodiments of the disclosure, it may not be understood as requiring these operations be performed in a particular order or in serial order, or requiring all the operations illustrated to be performed in order to obtain a desirable result. In a given environment, multitasking and parallel processing may be advantageous.

It may be further understood that the meanings of terms such as "in response to", "if", and "in case of" as used in the disclosure depend on the context and actual usage scenarios. For example, the term "if" as used herein may be interpreted as "when" or "in case that".

Other embodiments of the disclosure will be apparent to those skilled in the art from consideration of the specification and practice of the disclosure disclosed here. This application is intended to cover any variations, uses, or adaptations of the disclosure following the general principles thereof and including such departures from the disclosure as come within known or customary practice in the art.

It may be understood that the disclosure is not limited to the precise structure that is described above and illustrated in the accompanying drawings, and various modifications and changes may be made without departing from the scope of the disclosure. The scope of the disclosure is limited only by the scope of the appended claims.

## Claims

1. A method for configuring an uplink waveform, applied to a terminal, comprising:
receiving first information sent by a network device, the first information being used to indicate a sending waveform actually used for a physical uplink shared channel (PUSCH) transmission by the terminal.

2. The method of claim 1, wherein the first information is carried in a radio resource control (RRC) signaling and a medium access control control element (MAC CE) signaling.

3. The method of claim 2, wherein the RRC signaling is used to indicate one or more sending waveforms,
the MAC CE signaling is used to indicate a first sending waveform in the one or more sending waveforms indicated by the RRC signaling, and the first sending waveform is taken as the sending waveform actually used for the PUSCH transmission by the terminal; or
the MAC CE signaling is used to update a single sending waveform indicated by the RRC signaling to a second sending waveform, the second sending waveform being different from the single sending waveform, and the second sending waveform is taken as the sending waveform actually used for the PUSCH transmission by the terminal.

4. The method of claim 1, wherein the first information is carried in an MAC CE signaling, the MAC CE signaling is used to indicate the sending waveform actually used for the PUSCH transmission by the terminal.

5. The method of claim 1, wherein the first information is carried in a downlink control information (DCI) signaling,
the DCI signaling comprises waveform indication information and is used to schedule the PUSCH transmission; and
the waveform indication information is used to indicate the sending waveform actually used for the PUSCH transmission by the terminal.

6. The method of claim 5, wherein the waveform indication information is carried in an information indication field newly added in the DCI, the information indication field newly added is dedicated to indicating the sending waveform actually used for the PUSCH transmission by the terminal.

7. The method of claim 5, wherein the waveform indication information is carried in a redefined information indication field in the DCI, wherein the redefined information indication field is used to indicate the sending waveform actually used for the PUSCH transmission by the terminal, and to indicate other information than the sending waveform.

8. The method of claim 7, wherein there is an implicit corresponding relationship of joint indication between the waveform indication information and the other information, wherein the implicit corresponding relationship is a corresponding relationship identified in the terminal but not in the other information.

9. The method of claim 7, wherein there is an explicit corresponding relationship of joint indication between the waveform indication information and the other information, wherein the explicit corresponding relationship is a corresponding relationship identified in the other information.

10. The method of claim 7, wherein the other information comprises at least one of:
a number of antenna ports under a single carrier;
pre-coding information of a transmitted precoding matrix indicator (TPMI) indication field;
time domain resource allocation (TDRA) information; or
bandwidth part (BWP) information.

11. The method of any one of claims 1 to 10, wherein the PUSCH comprises: a centralized generation (CG) PUSCH with a first authorization type, a CG PUSCH with a second authorization type, or a distributed generation (DG) PUSCH.

12. A method for configuring an uplink waveform, applied to a network device, comprising:
sending first information to a terminal, the first information being used to indicate a sending waveform actually used for a physical uplink shared channel (PUSCH) transmission by the terminal.

13. The method of claim 12, wherein the first information is carried in a radio resource control (RRC) signaling and a medium access control control element (MAC CE) signaling.

14. The method of claim 13, wherein the RRC signaling is used to indicate one or more sending waveforms,
the MAC CE signaling is used to indicate a first sending waveform in the one or more sending waveforms indicated by the RRC signaling, and the first sending waveform is taken as the sending waveform actually used for the PUSCH transmission by the terminal; or
the MAC CE signaling is used to update a single sending waveform indicated by the RRC signaling to a second sending waveform, the second sending waveform being different from the single sending waveform, and the second sending waveform is taken as the sending waveform actually used for the PUSCH transmission by the terminal.

15. The method of claim 12, wherein the first information is carried in an MAC CE signaling, the MAC CE signaling is used to indicate the sending waveform actually used for the PUSCH transmission by the terminal.

16. The method of claim 12, wherein the first information is carried in a downlink control information (DCI) signaling,
the DCI signaling comprises waveform indication information and is used to schedule the PUSCH transmission; and
the waveform indication information is used to indicate the sending waveform actually used for the PUSCH transmission by the terminal.

17. The method of claim 16, wherein the waveform indication information is carried in an information indication field newly added in the DCI, the information indication field newly added is dedicated to indicating the sending waveform actually used for the PUSCH transmission by the terminal.

18. The method of claim 16, wherein the waveform indication information is carried in a redefined information indication field in the DCI, the redefined information indication field being used to indicate the sending waveform actually used for the PUSCH transmission by the terminal, and to indicate other information than the sending waveform.

19. The method of claim 18, wherein there is an implicit corresponding relationship of joint indication between the waveform indication information and the other information, the implicit corresponding relationship being a corresponding relationship identified in the terminal but not in the other information.

20. The method of claim 18, wherein there is an explicit corresponding relationship of joint indication between the waveform indication information and the other information, the explicit corresponding relationship being a corresponding relationship identified in the other information.

21. The method of claim 18, wherein the other information comprises at least one of:
a number of antenna ports under a single carrier;
pre-coding information of a transmitted precoding matrix indicator (TPMI) indication field;
time domain resource allocation (TDRA) information; or
bandwidth part (BWP) information.

22. The method of any one of claims 12 to 21, wherein the PUSCH comprises: a centralized generation (CG) PUSCH with a first authorization type, a CG PUSCH with a second authorization type, or a distributed generation (DG) PUSCH.

23. An apparatus for configuring an uplink waveform, applied to a terminal, comprising:
a receiving unit, configured to receive first information sent by a network device, the first information being used to indicate a sending waveform actually used for a physical uplink shared channel (PUSCH) transmission by the terminal.

24. An apparatus for configuring an uplink waveform, applied to a network device, comprising:
a sending unit, configured to send first information to a terminal, the first information being used to indicate a sending waveform actually used for a physical uplink shared channel (PUSCH) transmission by the terminal.

25. A device for configuring an uplink waveform, applied to a terminal, comprising:
a processor; and
a memory for storing executable instructions by the processor,
wherein the processor is configured to execute the method of any one of claims 1 to 11.

26. A device for configuring an uplink waveform, applied to a network device, comprising:
a processor; and
a memory for storing executable instructions by the processor,
wherein the processor is configured to execute the method of any one of claims 12 to 22.

27. A storage medium for storing instructions, wherein when the instructions in the storage medium are performed by a processor of a terminal, the terminal is caused to execute the method of any one of claims 1 to 11.

28. A storage medium for storing instructions, wherein when the instructions in the storage medium are performed by a processor of a network device, the network device is caused to execute the method of any one of claims 12 to 22.

29. A non-transitory computer-readable storage medium, wherein when instructions in the storage medium are performed by a processor of a terminal, the terminal is caused to execute the method of any one of claims 1 to 11.

30. A non-transitory computer-readable storage medium, wherein when instructions in the storage medium are performed by a processor of a network device, the network device is caused to execute the method of any one of claims 12 to 22.
